# EUROPÄISCHE PATENTSCHRIFT

(11) **EP 2 987 617 B1**
(45) Veröffentlichungstag und Bekanntmachung des Hinweises auf die Patenterteilung: **27.09.2017**
(21) Anmeldenummer: 14181640.5
(22) Anmeldetag: 20.08.2014
(51) Int. Cl.: B29C 49/58, B29C 49/46, B65B 3/02, B29C 49/42, B29C 49/06, B29C 49/12, B29K 67/00, B29K 27/06

(54) **Ventilblock für eine Behandlungsstation einer Formfüllmaschine und Formfüllmaschine mit einem solchen Ventilblock**
Valve block for a treatment station of a blow moulding and filling machine and blow moulding and filling machine with such a valve block
Bloc de soupapes pour une station de traitement d'une machine de souflage et remplissage et machine de souflage et remplissage dotée d'un bloc de soupapes

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE)
(74) Vertreter: Grünecker Patent- und Rechtsanwälte PartG mbB

(56) Entgegenhaltungen:
- EP-A1- 1 584 601
- EP-A1- 2 143 545
- WO-A1-2012/010460
- US-A1- 2011 031 659

## Beschreibung

### Gebiet der Erfindung

Die vorliegende Erfindung betrifft eine Formfüllmaschine zum Herstellen und Füllen von Kunststoffbehältern, insbesondere Kunststoffflaschen, in der ein Gas dazu verwendet wird, zumindest teilweise einen Kunststoffbehälter zu formen, und insbesondere betrifft die Erfindung einen Ventilblock für eine Behandlungsstation einer solchen Formfüllmaschine.

### Stand der Technik

Bekanntermaßen lassen sich Kunststoffbehälter im Streckblasverfahren aus Vorformlingen herstellen.

Alternativ zu einem Aufblasen der Behälter mit Druckluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist. Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Druckluft verdrängt und läuft aus dem Behälter ab. Die US 2011/0031659 offenbart eine Vorrichtung für eine Behandlungsstation einer Formfüllmaschine mit einem ersten Blasgaskanal in Fluidverbindung mit einem ersten Blasgaskanalventil, mit einem Produktkanal in Fluidverbindung mit dem Düsenkanal, wobei der Produktkanal von dem Düsenkanal durch ein Absperrventil getrennt ist. In der EP 1 584 601 A wird eine Füllmaschine mit einem Füllelement beschrieben, das einen Produktkanal 10, einen Gaskanal 19 und Ringkanäle 5, 7 und 9 sowie ein in dem Produktkanal vorgesehenes Ventil mit einem Ventilkörper aufweist.

Der herkömmliche Streckblasprozess nach dem Stand der Technik gliedert sich in zwei Phasen, das sogenannte Vorblasen bei dem der Vorformling gereckt und unter Druckluftzufuhr unter einem ersten Vorblasdruck zu einer Blase geformt wird und das sogenannte Fertigblasen, bei dem die vorgeblasene Flasche unter einem höheren Druckluftniveau fertig ausgeformt wird. Insbesondere während der Vorblasphase wird maßgeblich auf die Wanddickenverteilung des auszuformenden Behälters Einfluss genommen. Bei den eingangs beschriebenen Formfüllmaschinen, die den Behälter mittels Fluid aufpressen, ist der Einfluss auf die Wandstärke hingegen nur schwer kontrollierbar.

Aufgabe der vorliegenden Erfindung ist es, bekannte Vorrichtungen zum Ausformen und Füllen von Kunststoffbehältern, insbesondere Vorrichtungen, in denen die Kunststoffbehälter nur teilweise durch Blasformen hergestellt werden, in vorteilhafter Weise weiterzubilden.

### Beschreibung der Erfindung

Oben genannte Aufgabe wird durch einen Ventilbock für eine Behandlungsstation einer Formfüllmaschine gemäß Anspruch 1 gelöst. Vorteilhafte Ausführungsformen der Erfindung sind in den Unteransprüchen definiert.

Es wird bereitgestellt ein Ventilblock gemäß Anspruch 1 und insbesondere ein Ventilblock für eine Behandlungsstation einer Formfüllmaschine, wobei der Ventilblock umfasst: einen Düsenkanal, einen ersten Blasgaskanal in Fluidverbindung mit dem Düsenkanal und möglicherweise einen zweiten Blasgaskanal in Fluidverbindung mit dem Düsenkanal, wobei der erste Blasgaskanal ein erstes Blasgaskanalventil aufweist und der möglicherweise vorgesehene zweite Blasgaskanal ein zweites Blasgaskanalventil aufweist, eine Kammer in Fluidverbindung mit dem Düsenkanal, wobei die Kammer von dem Düsenkanal durch ein Absperrventil getrennt ist, und möglicherweise einen Produktkanal (kann auch ausgelagert sein) in Fluidverbindung mit der Kammer und möglicherweise mit einem Produktkanalventil, wobei das erste und das möglicherweise vorgesehene zweite Blasventil oberhalb des Absperrventils angeordnet sind. Insbesondere enden also der erste und zweite Blasgaskanal oberhalb des Absperrventils in den Düsenkanal und zumindest ein Teil von ihnen ist jeweils durch die entsprechenden Blasgasventile von diesem getrennt. Die Blasgaskanäle können vollständig oberhalb des Absperrventils angeordnet sein. Insbesondere können die Blasgaskanäle vollständig oberhalb der Kammer angeordnet sein.

Die Kammer dient auch hier zur Bereitstellung des Produkts. In ihr kann ein Kolben vorhanden sein, der das Produkt durch das zweite Absperrventil drücken kann. Alternativ kann der Kolben auch außerhalb des Ventilblocks in einer separaten Kammer angeordnet sein und von dort aus das Medium in die zweite Kammer und durch das Absperrventil pressen. Es wäre auch denkbar, auf den Kolben zu verzichten und beispielsweise über die Schwerkraft das Produkt zu dem zweiten Absperrventil zu führen.

Die Fluidverbindungen erfolgen also jeweils über entsprechende Ventile. Die bereitgestellten Ventilblöcke können insbesondere einen Blasgaskanal zum Vorblasen und einen Blasgaskanal zum Zwischen- oder Fertigblasen aufweisen.

Ein Formfüllmaschine umfasst hierbei definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter. Die Kunstoffbehälter werden zumindest teilweise durch das expandierende Umformen hergestellt. Ein Fertigstellen von durch das Umformen teilweise hergestellen Kunststoffbehältern kann durch das abzufüllende Produkt oder ein weiteres flüssiges Medium erfolgen.

Flüssigkeiten, auch solche mit darin gelöstem Kohlendioxid oder dergleichen sind definitionsgemäß hinsichtlich ihrer Funktion beim Ausformen und Füllen der Behälter inkompressible Fluide im Gegensatz zu Gasen, die funktional als kompressible Fluide definiert sind.

Die Begriffe "oberhalb" und "unterhalb" werden hier im üblichen Sinne gebraucht, d.h., ein "oberhalb" positioniertes Objekt befindet sich in einem externen Gravitationsfeld von Gravitationszentrum weiter entfernt als ein "unterhalb" positioniertes Objekt. Insbesondere ist ein oberhalb positioniertes Element eine Ventilblocks einer Behandlungsstation einer Formfüllmaschine von einer Öffnung eine herzustellenden oder zu füllenden Kunstsoffbehälters weiter entfernt als ein unterhalb positioniertes Element.

Erfindungsgemäß werden die Blasluftkanäle durch andere (Blasgas-)Ventile geregelt als der Produktkanal. Insbesondere können zur Regelung der Blasluftkanäle bzw. einer Kammer, in die die Blasluftkanäle enden, Ventile Verwendung finden, wie sie auch für herkömmliche Blasformmaschinen verwendet werden. Diese Ventile müssen somit nicht dazu ausgelegt sein, einem flüssigen Produktmedium widerstehen zu können. Andererseits muss das zur Regelung des Produktstroms in den Düsenkanal hinein verwendete Absperrventil zur Regulierung des flüssigen Produkts ausgebildet sein. Aufwändige Ventilkonstruktionen zur Regelung sowohl gasförmiger als auch flüssiger Medien sind somit nicht notwendig, wodurch die Konstruktion des Ventilblocks verlässlicher arbeitet und kostengünstiger bereitgestellt werden kann, als es im Stand der Technik bekannt ist.

Der Produktkanal endet in einer Kammer, von welcher aus das Produkt in den Düsenkanal zul Füllen eines fertig hergestellten Kunststoffbehälters oder zum Fertigstellent eines durch Formblasen mithilfe eines Blasgases vorgefertigen Kunststoffbehälters gelangen kann. Ebenso kann ein anderes flüssiges Medium, das von dem abzufüllenden Produkt verschieden ist, durch den Produktkanal oder einen anderen Kanal in die Kammer und von dieser über den Düsenkanal zum Fertigstellen eines durch Formblasen mithilfe eines Blasgases vorgefertigten Kunststoffbehälters gelangen. In beiden Fällen kann ein beweglicher Kolben zur Druckerzeugung vorgesehen sein, der bei einer Bewegung in die Kammer hinein das Produkt oder anderweitige flüssige Medium aus der Kammer in den Düsenkanal hineindrückt. So kann das Produkt oder anderweitige flüssige Medium zuverlässig in den Düsenkanal gefördert werden.

Der in die Kammer endende und mit einem Ventil versehene Produktkanal kann oberhalb der Kammer verlaufen. Die Blasgaskanäle können seitlich von dem beispielsweise im Wesentlichen sich senkrecht erstreckenden Düsenkanal angeordnet sein. Wenn sie ihrerseits in einer Kammer enden, kann auch diese Kammer seitlich von dem beispielsweise im Wesentlichen sich senkrecht erstreckenden Düsenkanal angeordnet sein.

Der Ventilblock gemäß einem der obigen Beispiele kann einen Cleaning-In-Place-, CIP-, Kanal in Fluidverbindung mit dem Düsenkanal und mit einem CIP-Kanalventil aufweisen. Somit wird eine CIP-Reinigung vorgesehen, durch die eine Entkeimung erfolgen kann, bei der eine Demontage von Elementen der Behandlungsstation beziehungsweise des Ventilblocks im Wesentlichen vermieden werden kann. Gemäß einer Weiterbildung weist der Ventilblock zusätzlich eine Düsenöffnung, in die der Düsenkanal endet, und eine beispielsweise klappbare oder verschiebbare CIP-Klappe, die zum Schließen und Öffnen der Düsenöffnung beweglich ist, auf.

Weiterhin wird bereitgestellt eine Formfüllmaschine mit einer Behandlungsstation mit einem Ventilblock gemäß oben genannter Beispiele und mit einem CIP-Kanal, wobei die Formfüllmaschine einen Drehverteiler aufweist, über den eine Produktleitung in den Produktkanal, eine sich verzweigende Blasgasleitung in den ersten und zweiten Blasgaskanal (wenn vorgesehen) und eine CIP-Leitung direkt in den CIP-Kanal bedient werden. Eine solche Formfüllmaschine kann alternativ einen Drehverteiler aufweisen, über den eine Produktleitung in den Produktkanal und eine sich verzweigende Blasgasleitung in den ersten und zweiten Blasgaskanal (wenn vorgesehen) und in den CIP-Kanal bedient werden. Der Drehverteiler dient jeweils der Verteilung eines Mediums in die Leitungen. Das Medium kann beispielsweise in Form von einem Blasgas von einem Kompressor oder Druckminderer beziehungsweise in Form eines Produkts aus einem Produkttank oder Karbonisierer geliefert werden.

Die Formfüllmaschine kann eine Rotationsmaschine (rundlaufende Maschine) sein, die ein drehbares Transportrad (Karussell) aufweist, an dem eine Mehrzahl an Behandlungsstationen mit je einem Ventilblock gemäß einem der oben beschriebenen Beispiele angebracht ist. Gemäß einer Weiterbildung umfasst die Formfüllmaschine mit einem Ventilblock gemäß einem der oben beschriebenen Beispiele Ringleitungen zum Verteilen von Blasgas, das den Blasluftkanälen zuzuführen ist, und einem Produkt, das dem Produktkanal zuzuführen ist.

Der Produktkanal kann zum Reinigen verwendet werden. In diesem Fall kann die Formfüllmaschine einen CIP-Reinigungsmitteltank umfassen, der mit dem Produktkanal zum Ausführen einer CIP-Reinigung verbunden ist.

Die oben genannten Formfüllmaschinen können dazu ausgebildet sein, Kunststoffbehälter derart herzustellen, dass sie zwischen 20% und 95%, beispielsweise zwischen 30% und 90% ihres späteren Volumens, durch teilweises Blasformen erhalten. Insbesondere können die Behälter zwischen 30% und 100%, bevorzugt zwischen 50% und 100%, ihrer Längserstreckung (von Mündung zu Boden) während des teilweisen Blasformens erhalten. Insbesondere wird bei dem teilweisen Vorblasen des Behälters eine Reckstange in diesen eingeführt, welche eine Längsreckung des Vorformlings bewirkt.

Gemäß Weiterbildung ist insbesondere eine Vielzahl von Behandlungsstationen bzw. Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad. Der Rundläufer dreht sich insbesondere um eine vertikale Achse, deren Verlängerung den Erdmittelpunkt schneidet.

Insbesondere sind die Behandlungsstationen alle in äquidistanten Abständen zueinander angeordnet. Die Behandlungsstationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

In sämtlichen oben beschriebenen Beispielen kann die Formfüllmaschine eine Verschlusseinrichtung aufweisen, die zum Verschließen der gefüllten Kunststoffbehälter, beispielsweise mithilfe von Drehverschlüssen, ausgebildet ist. Insbesondere findet das Verschließen in einem Zeitraum statt, innerhalb dem der Behälter noch in der Form bzw. Kavität, in der er geformt wurde, angeordnet ist. Die Verschlusseinrichtung befindet sich hierfür in der unmittelbaren Umgebung des Rundläufers, insbesondere in seiner Peripherie und spendet den Verschluss zu einem Zeitpunkt, bei welchem schon sämtliches Endprodukt im Behälter ist und eine Blas- oder Fülldüse vom Behälter abgehoben wurde.

Insbesondere findet die Herstellung bzw. Expansion und das Befüllen der Behälter innerhalb eines Raums mit kontaminationsarmer Umgebung statt. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Der Raum ist insbesondere im Wesentlichen scheibenförmig ausgebildet. Er kann auch ring- oder torusförmig ausgebildet sein - die Drehachse ist dann außerhalb der kontaminationsarmen Umgebung.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport bzw. weiteren Handling des Vorformlings/Behälters vorgesehen ist.

In Transportrichtung der Behälter stromaufwärts der Formfüllmaschine kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

Anstatt der eben beschriebenen Verfahren und Vorrichtungen zum Erwärmen von kalten (Umgebungstemperatur) Vorformlingen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. Unter Umständen muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt, kurz bevor diese an die Formfüllmaschine weitergegeben werden. Werden die Vorformlinge innerhalb eines Reinraums spritzgegossen, so ist unter Umständen keine weitere Sterilisation dieser nötig, wenn sich der Reinraum bis zu einer Position hin erstreckt, an der ein Verschluss auf den Behälter nach dem Befüllen aufgebracht wird.

Im Folgenden werden Ausführungsformen einer erfindungsgemäßen Formfüllmaschine beziehungsweise eines erfindungsgemäßen Ventilblocks für eine Formfüllmaschine unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht allgemein eine Formfüllmaschine mit einer Behandlungsstation, die einen Ventilblock gemäß einem Beispiel der vorliegenden Erfindung aufweisen kann.
Figur 2 veranschaulicht eine Behandlungsstation der Formfüllmaschine von Figur 1 in einem Längsschnitt.
Figur 3 veranschaulicht ein Beispiel für eine erfindungsgemäße Formfüllmaschine mit einem Ventilblock mit Absperrventilen, die Kammern absperren und öffnen können, aus denen ein Blasgas beziehungsweise ein Produkt in einen Düsenkanal des Ventilblocks über die Absperrventile gelangen können.
Figur 4 zeigt ein weiteres Beispiel für eine erfindungsgemäße Formfüllmaschine mit einem Ventilblock mit Absperrventilen, die Kammern absperren und öffnen können, aus denen ein Blasgas beziehungsweise ein Produkt in einen Düsenkanal des Ventilblocks über die Absperrventile gelangen können.
Figur 5 zeigt ein Beispiel für eine erfindungsgemäße Formfüllmaschine mit einem Ventilblock mit Blasgaskanälen, die oberhalb eines Absperrventils einer Kammer, in die ein Produktkanal endet, angeordnet sind.
Figur 6 zeigt ein Beispiel für eine erfindungsgemäße Formfüllmaschine mit einem Ventilblock mit Absperrventilen, in dem ein Produkt durch Schwerkraft in einen Düsenkanal geleitet wird.
Figur 7 zeigt ein weiteres Beispiel für eine erfindungsgemäße Formfüllmaschine mit einem Ventilblock mit Absperrventilen, in dem ein Produkt durch Schwerkraft in einen Düsenkanal geleitet wird, wobei Blaskanäle oberhalb eines Absperrventils eines Produktkanals angeordnet sind.

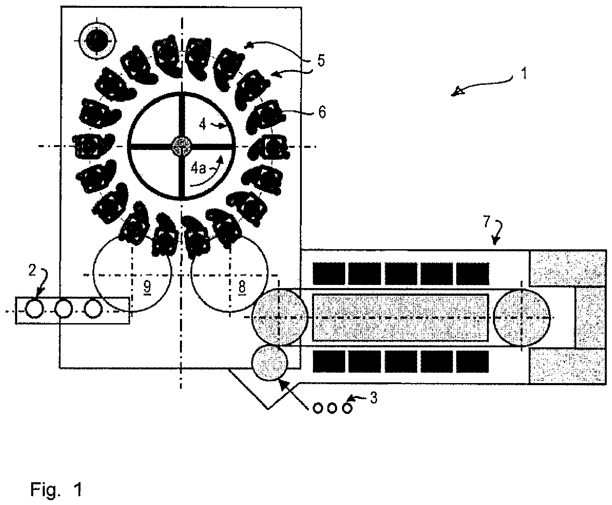

Die vorliegenden Erfindung betrifft eine Formfüllmaschine, in der sowohl die Herstellung von Kunststoffbehältern als auch deren Füllung erfolgt. Die Kunststoffbehälter können beispielsweise aus PET oder PVC hergestellt sein. In den Figuren zweigen gleiche Bezugszeichen gleiche Elemente. Figur 1 zeigt allgemein eine solche Formfüllmaschine 1. Die Formfüllmaschine 1 ist als Rundläufer ausgebildet und umfasst eine Mehrzahl an Behandlungsstationen 5, die jeweils eine Hohlform 6 aufweisen. In dem gezeigten Beispiel sind die einzelnen Behandlungsstationen mit ihren Hohlformen auf einem drehbaren Transportrad 4 mit Drehrichtung 4a symmetrisch um die Drehachse des Transportrads 4 angebracht. Vorformlinge 3 werden aus einem Ofen 7, in dem diese Vorformlinge 3 zur nachfolgenden Formung vorgeheizt werden, über einen Einlaufstern 8 an die Hohlformen 6 der Behandlungsstationen 5 übergeben. Dort werden aus den Vorformlingen 3 Kunststoffbehälter 2 geformt und es werden in den Hohlformen 6 diese Kunststoffbehälter 2 mit einem abzufüllenden Produkt gefüllt und über einen Auslaufstern 9 ausgegeben.

In den Behandlungsstationen 5 können aus den Vorformen 3 die Kunststoffbehälter 2 vollständig oder teilweise durch Blasformen hergestellt werden. Wenn sie lediglich teilweise durch das Blasformen hergestellt werden, erfolgt in einem ersten Stadium ein teilweises Blasformen der Vorformlinge 3 gefolgt von einem zweiten Stadium, in dem die Kunststoffbehälter 2 mithilfe des eingefüllten Produkts fertig hergestellt werden. Im Zentrum des Rads nur schemenhaft angedeutet sieht man den Drehverteiler, an den mindestens eine stationäre Leitung von Produkt und eine stationäre Leitung von Blasgas angeschlossen sind. Nach der Einführung der Medien in den Drehverteiler werden diese in den drehenden Teil 4 der Maschine gepumpt bzw. geführt.

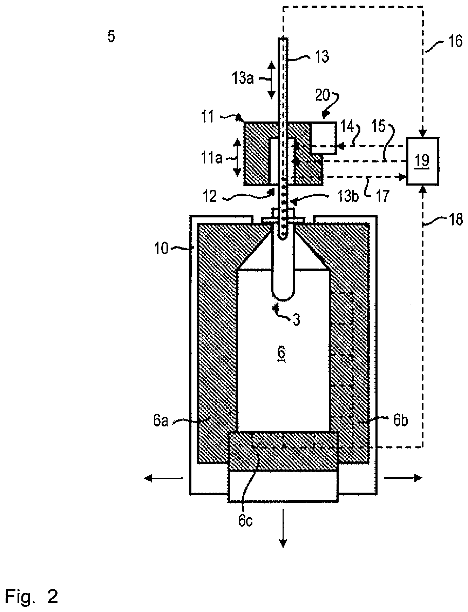

Figur 2 zeigt sehr schematisch einen Längsschnitt durch eine Behandlungsstation 5 der in Figur 1 gezeigten Formfüllmaschine. Die Hohlform oder Kavität 6 der Behandlungsstation 5 weist die Formteile 6a bis 6c jeweils in einem Formträgerteil 10 auf. Die Behandlungsstation 5 umfasst eine bewegliche Ventileinheit mit einem Ventilkopf (Ventilblock) 11, wobei der Hub der gesamten Ventileinheit in Figur 2 durch das Bezugszeichen 11a veranschaulicht wird. Der Ventilkopf 11 weist eine Düse 12 auf, durch welche CO₂ und das Produkt in den Vorformling bzw. teilweise oder vollständig hergestellten Kunststoffbehälter eingeleitet werden. Weiterhin umfasst die Behandlungsstation 5 eine bewegliche Reckstange 13, wobei der Hub der Reckstange 13 bezüglich der Ventileinheit durch das Bezugszeichen 13a veranschaulicht wird. Die Reckstange 13 weist Öffnungen 13b auf. Diese können zum Ausbringen oder Absaugen des CO₂ nach Beenden des (teilweisen) Blasformens verwendet werden. Auch kann durch diese Öffnungen 13b CO₂ zumindest teilweise für den Blasformprozess zugeführt werden - je nach Schaltung der Ventile. Die Bewegungsrichtungen der Reckstange 13a und der Düse 11a sind vertikal.

Weiterhin zeigt Figur 2 eine Zuleitung 14 für CO₂, geliefert von einem mit einer Kompressoreinrichtung verbundenem Ventil 20, und eine Zuleitung 15 für das abzufüllende Produkt. Jede dieser Zuleitungen 14 und 15 kann entsprechende Ventile zum Regeln des Gas- bzw. Produktstroms durch die Zuleitungen aufweisen. Weiterhin sind eine Leitung 16 zum Absaugen oder Abführen des CO₂ nach Beenden des (teilweisen) Blasformens durch die Öffnungen 13b der Reckstange 13, eine pneumatische Absaugleitung 17 für den Innenraum des Kunststoffbehälters beim Füllen und eine pneumatische Absaugleitung 18 für die Hohlform (bzw. die Außenseite des Kunststoffbehälters beim Füllen vorgesehen. Sämtliche Leitungen 14, 15, 16, 17 und 18 enden in dem gezeigten Beispiel in einem Drehverteiler 19. Der Drehverteiler 19 zum Verteilen der einzelnen Medien kann ein gemeinsamer Drehverteiler für sämtliche Behandlungsstationen der Formfüllmaschine sein.

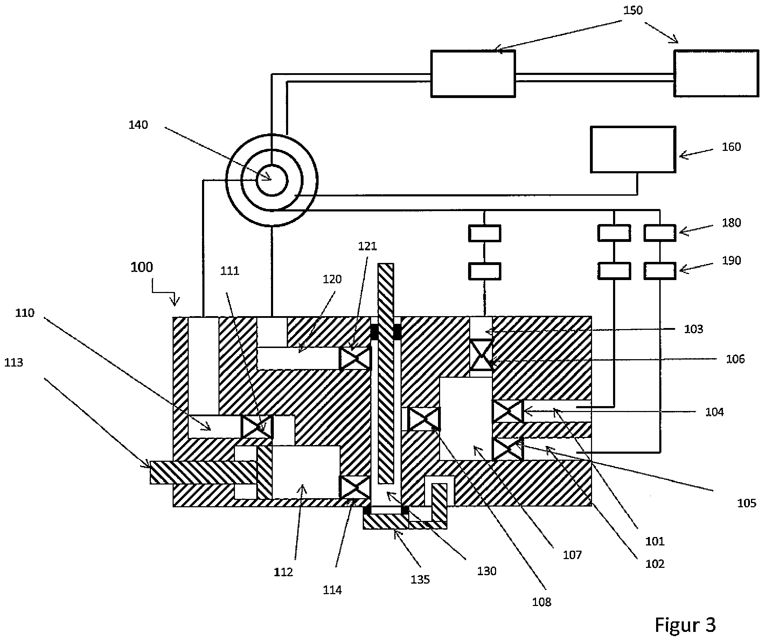

Eine Formfüllmaschine mit einem Ventilblock mit Absperrventilen, die Kammern absperren und öffnen können, aus denen ein Blasgas beziehungsweise ein Produkt in einen Düsenkanal des Ventilblocks über die Absperrventile gelangen können, ist in Figur 3 gezeigt. Im Einzelnen zeigt Figur 3 einen Ventilblock 100 mit drei Blasluftkanälen 101, 102 und 103. Durch den Blasgaskanal 101 kann ein Blasgas zum Vorblasen mit einem Druck von 3 bis 20 bar, durch den Blasgaskanal 102 kann ein Blasgas zum Zwischenblasen mit einem Druck von 5 bis 30 bar und durch den Blasgaskanal 103 kann ein Blasgas zum Fertigblasen mit einem Druck von 7 bis 40 bar geleitet werden. Es kann noch ein weiterer Kanal vorhanden sein zur Erzeugung eines Vakuums im Behälter, der in dieser Ausführungsform auch an den Raum 107 über ein Ventil anschließt und welcher mit einer Vakuumquelle verbunden sein kann (nicht gezeigt). Die Vakuumquelle kann auf dem Karussell angeordnet sein und ein Vakuum für eine Vielzahl von Stationen bereitstellen oder im stationären Teil angeordnet sein und das Vakuum (Unterdruck) über den Drehverteiler 140 (weitere Spur) den Behandlungsstationen zur Verfügung stellen. Der Vakuumkanal kann von einer Reinigung ausgenommen werden, kann aber auch dem Zurückführen des Reinigungsmittels dienen.

Die einzelnen Blasgaskanäle enden in eine erste Kammer 107 des Ventilblocks 100 und weisen die Ventile 104, 105 und 106 auf. Weiterhin weist der Ventilblock 100 einen Produktkanal 110 mit einem weiteren Ventil 111 auf. Durch das weitere Ventil 111 ist zumindest ein Teil des Produktkanals von einer zweiten Kammer 112 getrennt. Weiterhin weist der Ventilblock 100 einen CIP-Rückspülkanal 120 mit einem weiteren Ventil 121 auf. Das Ventil 121 trennt zumindest einen Teil des CIP-Rückspülkanals von einem Düsenkanal 130. Zudem sind die erste und zweite Kammer 107 und 112 durch entsprechende Absperrventile 108 und 114 von dem Düsenkanal 130 getrennt.

Bei geöffnetem Absperrventil 108, und entsprechend geöffnetem Blaskanalventil 104, 105, 106, kann ein unter Druck stehendes Blasgas aus einem der Blasgaskanäle 101, 102 oder 103 in den Düsenkanal 130 gelangen, von wo aus es über einen Ausgang des Düsenkanals 130 in einen nicht gezeigten Vorformling oder einen teilweise hergestellten Kunststoffbehälter zum Blasformen ausgestoßen werden kann. Bei geöffnetem Absperrventil 114 kann ein Produkt, das zum Füllen eines fertig hergestellten Kunststoffbehälters und/oder Fertigstellen eines teilweise durch Blasformen hergestellten Kunststoffbehälters dient, in den Düsenkanal 130 gelangen. Es kann bei geöffnetem Absperrventil 114 mithilfe des von einem beweglichen Kolben 113 aufgebrachten Drucks in den Düsenkanal 130 gedrückt werden. Am Ausgang des Düsenkanals 130 kann noch eine schwenk-, heb- und senkbare CIP-Klappe 135 beweglich angebracht sein. Während des CIP-Reinigungsvorgangs wird die Düsenöffnung des Düsenkanals 130 mithilfe der CIP-Klappe 135 geschlossen.

Durch Vorsehen des Absperrventils 118 zum Absperren der ersten Kammer 107 wird vermieden, dass das flüssige Produkt in Kontakt mit den Ventilen 104, 105, 106 der Blasgaskanäle 101, 102, 103 gelangen kann. Somit können die Blasgaskanalventile 104, 105, 106 wie beim konventionellen reinen Blasformen vorgesehen sein, d.h., sie müssen einem flüssigen Medium keinen Widerstand leisten. Andererseits kann mithilfe des Absperrventils 114 ein Kontakt des Ventils 111 im Produktkanal 110 mit einem unter Druck stehenden Blasgas vermieden werden. Somit lassen sich die Ventile 111, 104, 105 und 106 jeweils für lediglich ein Medium auslegen, wodurch deren Konstruktion gegenüber dem Stand der Technik vereinfacht werden kann.

Die Blasgaskanäle 101, 102 und 103, der Produktkanal 110 und der CIP-Rückspülkanal 120 können über einen Drehverteiler 140 zum Verteilen des jeweiligen Mediums auf die unterschiedlichen Kanäle des Ventilblocks 100 beliefert werden. Der Drehverteiler 140 wird durch Produkttanks, Mixer, Entgaser und/oder Karbonisierer, etc. 150 sowie einem Kompressor 160 gespeist. In den entsprechenden Leitungen zu den Blasgaskanälen 101, 102 und 103 können Druckminderer 180 und Ringleitungen 190 geeignet vorgesehen werden.

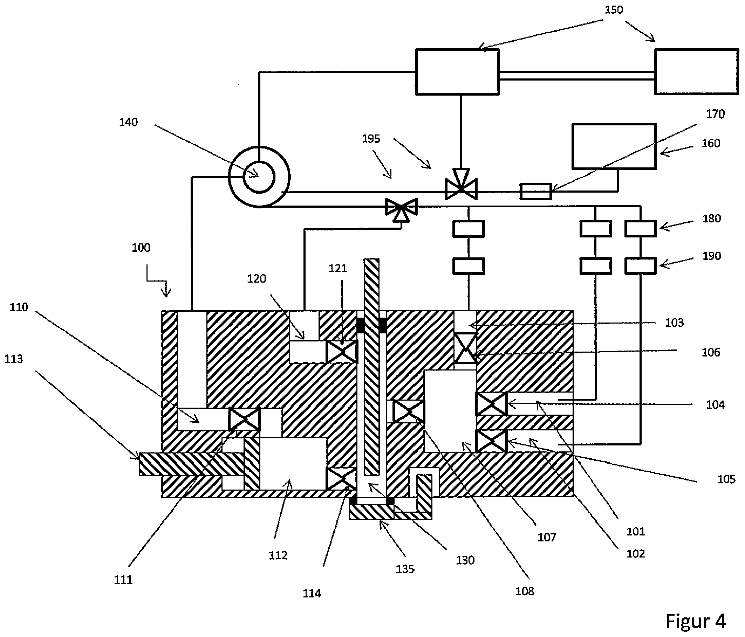

Figur 4 zeigt eine Variante der in Figur 3 gezeigten Formfüllmaschine. In der in Figur 4 gezeigten Ausführungsform weist der Drehverteiler 140 keine eigene Spur für den das Reinigungsmittel des CIP-Prozesses auf. Vielmehr erfolgt die CIP-Rückspülung über einen Teil der Blasgasleitung. Eine entsprechende Regelung des Reinigungsmittels und des Blasgases erfolgt über Mehrwegeventile 195, die in den Blasgasleitungen vorgesehen sind. Dem Kompressor 160 wird ein Filter 160 für das Blasgas nachgeschaltet. Als Reinigungsmittel für die CIP-Rückspülung kann beispielsweise Wasserstoffperoxid, Peressigsäure, Alkohol oder Seifenlauge dienen.

Auch hier kann wie in der in Figur 3 gezeigten Ausführungsform ein Vakuumkanal mit Ventil an den Raum 107 anschließen, beispielsweise unmittelbar links neben Ventil 106.

In den in den Figuren 3 bis 4 gezeigten Ausführungsform können die Absperrventile 108 und 114 verhindern, dass ein gegebenenfalls aggressives Reinigungsmittel, das für eine CIP-Rückspülung verwendet wird, mit den in den Blaskanälen 101, 102, 103 angeordneten Blaskanalventilen 104, 105, 106 beziehungsweise dem Produktkanalventil 111 in Kontakt kommt, so dass diese Ventile nicht aufwändig resistent gegen ein solches Reinigungsmittel ausgebildet sein müssen.

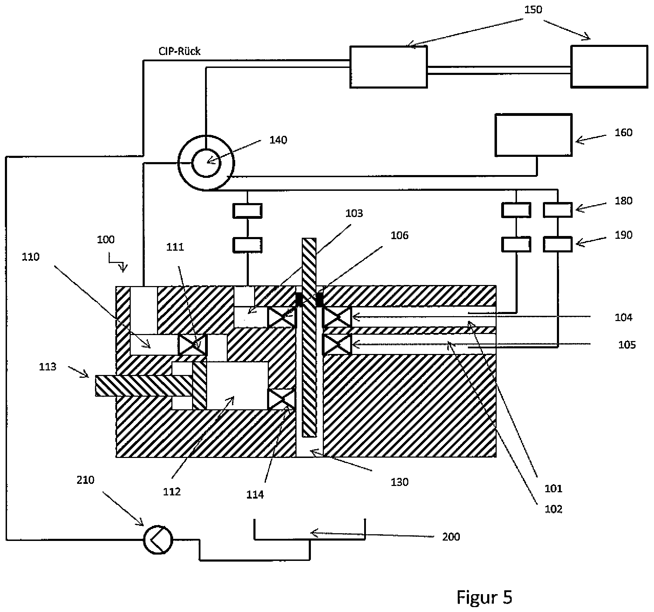

In Figur 5 ist ein Ventilblock 100 gezeigt, bei dem die vorgesehenen Blasgaskanäle 101, 102 und 103 direkt in den Düsenkanal 130 enden und entsprechende Ventile 104, 105 und 106 aufweisen. Wie in den in den Figuren 3 und 4 gezeigten Ausführungsformen umfasst der Ventilblock 100 einen Produktkanal 110 mit einem Ventil 111. Diese Kammer 112 ist von dem Düsenkanal 130 durch ein Absperrventil 114 getrennt, das im geschlossenen Zustand eine Kontaktierung des Ventils 111 im Produktkanal 110 mit unter Druck stehendem Blasgas, das aus den Blasgaskanälen 101, 102 und 103 geliefert wird, verhindert. Bei geöffnetem Absperrventil 114 kann ein aus dem Produktkanal 110 bei geöffnetem Ventil 111 geliefertes Produkt mithilfe des beweglichen Kolbens 113 in den Düsenkanal 130 gedrückt werden.

Da die Enden der Blasgaskanäle 101, 102 und 103 in den Düsenkanal 130, d.h., in dem gezeigten Beispiel die Ventile 104, 105 und 106, deutlich oberhalb des Absperrventils 114 angeordnet sind, kann eine Kontaktierung der Ventile 104, 105 und 106 mit dem Produkt vermieden werden, sofern der von dem beweglichen Kolben 113 verursachte Druck auf das Produkt in der Kammer 112 nicht so groß ist, dass das Produkt unerwünschterweise in den Düsenkanal nach oben bis zu den Ventilen 104, 105 und 106 gedrückt wird. Somit können die Ventile 104, 105 und 106 als reine gasregulierende Ventile ausgebildet werden, die dem Druck eines flüssigen Mediums nicht standhalten müssen und die nicht gegen eine Verschmutzung durch ein solches flüssiges Medium geschützt werden müssen.

In dem in Figur 5 gezeigten Beispiel wird keine CIP-Klappe vorgesehen, vielmehr kann die Reinigungsflüssigkeit, die beispielsweise wie in dem in Figur 4 gezeigten Beispiel über einen Teil der Blasleitungen geführt werden kann, direkt aus der Düsenöffnung des Düsenkanals 130 austreten. Zum Auffangen des CIP-Reinigungsmediums ist ein Auffangbecken 200 vorgesehen, von dem das CIP-Reinigungsmedium über eine Pumpe 210 zurückgeführt werden kann.

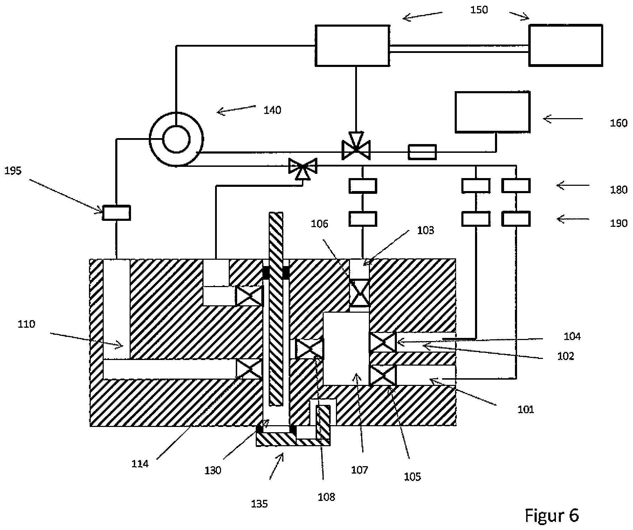

In den oben mit Bezug auf die Figuren 3 bis 5 beschriebenen Ausführungsformen wird das Produkt mithilfe eines Kolbens 113 aus der Kammer 112 in den Düsenkanal 130 gedrückt. Figur 6 hingegen zeigt eine Ausführungsform für eine erfindungsgemäße Formfüllmaschine mit einem Ventilblock 100, in dem ein Produkt durch Schwerkraft von dem Produktkanal 110 in den Düsenkanal 130 geleitet wird. Geregelt wird der Produktstrom wiederum durch ein Absperrventil 114. Im Produktkanal ist ein Ringkanal 195 zu allen übrigen Stationen vorgesehen. Eine CIP-Rückspülung kann wie in der mit Bezug auf Figur 4 beschriebenen Ausführungsform erfolgen. Durch Vorsehen des Absperrventils 118 zum Absperren der ersten Kammer 107 wird vermieden, dass das flüssige Produkt in Kontakt mit den Ventilen 104, 105, 106 der Blasgaskanäle 101, 102, 103 gelangen kann. Somit können die Blasgaskanalventile 104, 105, 106 wie beim konventionellen reinen Blasformen vorgesehen sein, d.h., sie müssen einem flüssigen Medium keinen Widerstand leisten. Der Drehverteiler 140 wird durch Produkttanks, Mixer, Entgaser und/oder Karbonisierer, etc. 150 sowie einem Kompressor 160 gespeist. In den entsprechenden Leitungen zu den Blasgaskanälen 101, 102 und 103 können Druckminderer 180 und Ringleitungen 190 geeignet vorgesehen werden.

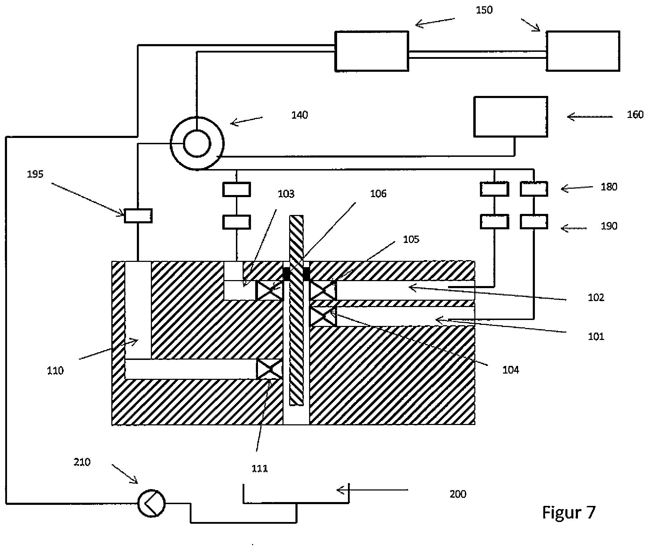

Figur 7 zeigt ein weiteres Beispiel für eine erfindungsgemäße Formfüllmaschine mit einem Ventilblock 100, in dem ein Produkt durch Schwerkraft in einen Düsenkanal 130 geleitet wird, wobei Blaskanäle 101, 102, 103 oberhalb eines Absperrventils 114 eines Produktkanals 110 angeordnet sind. Wie in der in Figur 5 gezeigten Ausführungsform kann, da die Enden der Blasgaskanäle 101, 102 und 103 in den Düsenkanal 130, d.h., in dem gezeigten Beispiel die Ventile 104, 105 und 106, deutlich oberhalb des Absperrventils 114 angeordnet sind, eine Kontaktierung der Ventile 104, 105 und 106 mit dem Produkt vermieden werden. Eine CIP-Rückspülung kann wie in der mit Bezug auf Figur 5 beschriebenen Ausführungsform erfolgen. Der Drehverteiler 140 wird durch Produkttanks, Mixer, Entgaser und/oder Karbonisierer, etc. 150 sowie einem Kompressor 160 gespeist. In den entsprechenden Leitungen zu den Blasgaskanälen 101, 102 und 103 können Druckminderer 180 und Ringleitungen 190 geeignet vorgesehen werden.

Einzelne Merkmale der anhand der Figuren beschriebenen Ausführungsform lassen sich untereinander geeignet kombinieren.

## Patentansprüche

1. Ventilblock (100) für eine Behandlungsstation einer Formfüllmaschine, wobei der Ventilblock (100) umfasst:
einen Düsenkanal (130);
einen ersten Blasgaskanal (101) in Fluidverbindung mit dem Düsenkanal (130) und mit einem ersten Blasgaskanalventil (104);
einen Produktkanal (110) in Fluidverbindung mit dem Düsenkanal (130), wobei der Produktkanal von dem Düsenkanal (130) durch ein Absperrventil (114) getrennt ist; wobei
das erste Blasgaskanalventil (104) oberhalb des Absperrventils (114) angeordnet ist.

2. Ventilblock (100) gemäß Anspruch 1, weiterhin mit einem zweiten Blasgaskanal (102) in Fluidverbindung mit dem Düsenkanal (130) und mit einem zweiten Blasgaskanalventil (102), das oberhalb des Absperrventils (114) angeordnet ist.

3. Ventilblock (100) gemäß Anspruch 1 oder 2, in dem der Produktkanal über eine Kammer mit dem Düsenkanal in Fluidverbindung steht und insbesondere weiterhin mit einem Kolben (113) zur Druckerzeugung, der in die Kammer (112) hinein und aus der Kammer (112) heraus beweglich ist.

4. Ventilblock (100) gemäß Anspruch 3, in dem der Produktkanal (110) oberhalb der Kammer (112) angeordnet ist und/oder in dem die Kammer (112) seitlich von dem Düsenkanal (130), der im Wesentlichen senkrecht ausgerichtet ist, angeordnet ist.

5. Ventilblock (100) gemäß einem der vorhergehenden Ansprüche, und weiterhin mit einem Cleaning-In-Place-, CIP-, Kanal (120) in Fluidverbindung mit dem Düsenkanal (130) und mit einem CIP-Kanalventil (121).

6. Ventilblock (100) gemäß einem der vorhergehenden Ansprüche, in dem der erste und/oder zweite Blasgaskanal seitlich von dem Düsenkanal (130), der im Wesentlichen senkrecht ausgerichtet ist, angeordnet ist.

7. Formfüllmaschine mit einer Behandlungsstation (5) mit einem Ventilblock (100) gemäß Anspruch 5, und weiterhin mit einem Drehverteiler (140), über den eine Produktleitung in den Produktkanal (110), eine sich verzweigende Blasgasleitung in den ersten und zweiten Blasgaskanal und eine CIP-Leitung direkt in den CIP-Kanal (120) bedient werden.

8. Formfüllmaschine mit einer Behandlungsstation (5) mit einem Ventilblock (100) gemäß Anspruch 5, und weiterhin mit einem Drehverteiler (140), über den eine Produktleitung in den Produktkanal (110) und eine sich verzweigende Blasgasleitung in den ersten und zweiten Blasgaskanal und in den CIP-Kanal (120) bedient werden.

9. Formfüllmaschine mit einer Behandlungsstation (5) mit einem Ventilblock (100) gemäß einem der Ansprüche 1 bis 6 und weiterhin mit einem drehbaren Transportrad (5), an dem eine Mehrzahl an Behandlungsstationen (5) mit je einem Ventilblock (100) gemäß einem der Ansprüche 1 bis 6 angebracht ist, und insbesondere weiterhin mit Ringleitungen (190) zum Verteilen von Blasgas, das den Blasluftkanälen zuzuführen ist, und einem Produkt, das dem Produktkanal (110) zuzuführen ist.

10. Formfüllmaschine gemäß einem der Ansprüche 1 bis 6 weiterhin mit einem CIP-Reinigungsmitteltank, der mit dem Produktkanal (110) zum Ausführen einer CIP-Reinigung verbunden ist.

## Claims

1. Valve block (100) for a treatment station of a blow moulding and filling machine, wherein the valve block (100) comprises:
a nozzle channel (130);
a first blowing-gas channel (101) in fluid communication with the nozzle channel (130) and with a first blowing-gas channel valve (104);
a product channel (110) in fluid communication with the nozzle channel (130), wherein the product channel is separated from the nozzle channel (130) by a shut-off valve (114), wherein
the first blowing-gas channel valve (104) is arranged above the shut-off valve (114).

2. Valve block (100) according to claim 1, further comprising a second blowing-gas channel (102) in fluid communication with the nozzle channel (130) and a second blowing-gas channel valve (102) which is arranged above the shut-off valve (114).

3. Valve block (100) according to claim 1 or 2, in which the product channel is in fluid communication with the nozzle channel via a chamber and in particular also with a piston (113) for pressure generation which is movable into the chamber (112) and out of the chamber (112).

4. Valve block (100) according to claim 3, in which the product channel (110) is arranged above the chamber (112) and/or in which the chamber (112) is arranged laterally from the nozzle channel (130) which is oriented substantially vertically.

5. Valve block (100) according to any one of the preceding claims, and further with a cleaning-in-place, CIP, channel (120) in fluid communication with the nozzle channel (130) and with a CIP channel valve (121).

6. Valve block (100) according to any one of the preceding claims, in which the first and/or second blowing-gas channel is arranged laterally from the nozzle channel (130) which is oriented substantially vertically.

7. Blow moulding and filling machine with a treatment station (5) with a valve block (100) according to claim 5, and further with a rotary distributor (140) via which a product line into the product channel (110), a branching blowing-gas line into the first and second blowing-gas channel and a CIP line directly into the CIP channel (120) are operated.

8. Blow moulding and filling machine with a treatment station (5) with a valve block (100) according to claim 5, and further with a rotary distributor (140) via which a product line into the product channel (110) and a branching blowing-gas line into the first and second blowing-gas channel and into the CIP channel (120) are operated.

9. Blow moulding and filling machine with a treatment station (5) with a valve block (100) according to any one of claims 1 to 6 and further with a rotary transportation wheel (5) on which plural treatment stations (5) with a respective valve block (100) according to any one of claims 1 to 6 are mounted, and particularly further with ring lines (190) for distributing blowing gas which is to be supplied to the blowing-air channels, and a product which is to be supplied to the product channel (110).

10. Blow moulding and filling machine according to any one of claims 1 to 6, further comprising a CIP cleaning agent tank which is connected to the product channel (110) for performing CIP cleaning.

## Revendications

1. Bloc de vannes (100) pour un poste de traitement d'une machine de formage et de remplissage, le bloc de vannes (100) comprenant :
un canal de buse (130) ;
un premier canal de gaz de soufflage (101) en liaison fluidique avec le canal de buse (130) et avec une première vanne de canal de gaz de soufflage (104) ;
un canal de produit (110) en liaison fluidique avec le canal de buse (130) ;
bloc de vannes
dans lequel le canal de produit est séparé du canal de buse (130) par une vanne d'arrêt (114) ; et
dans lequel la première vanne de canal de gaz de soufflage (104) est agencée au-dessus de la vanne d'arrêt (114).

2. Bloc de vannes (100) selon la revendication 1, comprenant, en outre, un deuxième canal de soufflage (102) en liaison fluidique avec le canal de buse (130), et une deuxième vanne de canal de gaz de soufflage (102), qui est agencée au-dessus de la vanne d'arrêt (114).

3. Bloc de vannes (100) selon la revendication 1 ou la revendication 2, dans lequel le canal de produit est en liaison fluidique avec le canal de buse par l'intermédiaire d'une chambre, et comportant par ailleurs notamment un piston (113) pour produire une pression, qui est mobile vers l'intérieur de la chambre (112) et de manière à sortir de la chambre (112).

4. Bloc de vannes (100) selon la revendication 3, dans lequel le canal de produit (110) est agencé au-dessus de la chambre (112), et/ou dans lequel la chambre (112) est agencée latéralement au canal de buse (130), qui est orienté sensiblement de manière verticale.

5. Bloc de vannes (100) selon l'une des revendications précédentes, et comprenant, en outre, un canal CIP (Cleaning In Place) (120), à savoir un canal de nettoyage en place (canal NEP), en liaison fluidique avec le canal de buse (130) et comprenant une vanne de canal CIP (121).

6. Bloc de vannes (100) selon l'une des revendications précédentes, dans lequel le premier et/ou le deuxième canal de gaz de soufflage est ou sont agencé(s) latéralement au canal de buse (130), qui est orienté sensiblement de manière verticale.

7. Machine de formage et de remplissage comprenant un poste de traitement (5) comportant un bloc de vannes (100) selon la revendication 5, et comprenant, en outre, un distributeur rotatif (140) par l'intermédiaire duquel une conduite de produit fournit le canal de produit (110), une conduite de gaz de soufflage, qui se subdivise, fournit le premier et le deuxième canal de gaz de soufflage, et une conduite CIP fournit directement le canal CIP (120).

8. Machine de formage et de remplissage comprenant un poste de traitement (5) comportant un bloc de vannes (100) selon la revendication 5, et comprenant, en outre, un distributeur rotatif (140) par l'intermédiaire duquel une conduite de produit fournit le canal de produit (110) et une conduite de gaz de soufflage, qui se subdivise, fournit le premier et le deuxième canal de gaz de soufflage et le canal CIP (120).

9. Machine de formage et de remplissage comprenant un poste de traitement (5) comportant un bloc de vannes (100) selon l'une des revendications 1 à 6, et comprenant, en outre, une roue de transport (5) rotative, sur laquelle sont placés une pluralité de postes de traitement (5) avec chacun un bloc de vannes (100) selon l'une des revendications 1 à 6, et comprenant notamment, en outre, des conduites annulaires (190) pour la distribution de gaz de soufflage, qui doit être acheminé aux canaux d'air de soufflage, et d'un produit qui doit être acheminé au canal de produit (110).

10. Machine de formage et de remplissage selon l'une des revendications 1 à 6, comprenant, en outre, un réservoir d'agent de nettoyage CIP, qui est relié au canal de produit (110), pour assurer un nettoyage CIP (nettoyage en place).
